# EUROPÄISCHE PATENTSCHRIFT

(11) **EP 0 713 728 B1**
(45) Veröffentlichungstag und Bekanntmachung des Hinweises auf die Patenterteilung: **07.04.1999**
(21) Anmeldenummer: 95116785.7
(22) Anmeldetag: 25.10.1995
(51) Int. Cl.: B03C 7/12

(54) **Röhrenfreifallscheider zur Trennung von Kunststoffgemengen**
Tube separator using free fall for separating plastic mixtures
Séparateur à tubes fonctionnant en chûte libre pour la séparation de mélanges en plastique

(30) Priorität: 29.10.1994 DE 4438704
(43) Veröffentlichungstag der Anmeldung: 29.05.1996
(73) Patentinhaber: Kali und Salz GmbH, 34111 Kassel (DE)
(72) Erfinder: Raschka, Norbert, D-36269 Philippsthal (DE); Stahl,Ingo,Dr., D-34246 Vellmar (DE)

(56) Entgegenhaltungen:
- DE-B- 1 154 052
- SU-A- 1 085 633
- US-A- 5 251 762

## Beschreibung

Die vorliegende Erfindung beinhaltet eine verbesserte Vorrichtung eines Röhrenfreifallscheiders zur Trennung von Kunststoffgemischen im elektrostatischen Feld.

In den letzten Jahren haben Trennungen im elektrostatischen Feld immer stärkere Beachtung in der technischen Anwendung gefunden, nicht nur bei Mineralien, sondern neuerdings auch bei der Trennung von Kunststoffgemischen, insbesondere bei denen, die ähnliche Dichten aufweisen und bei denen die übliche Sink-Schwimmaufbereitung versagt.

So beschreibt z.B. die DE 41 27 575 die Trennung Polyethylenterephthalat (PET) und Polyvinylchlorid (PVC) und die DE 41 27574 die Trennung Polyethylen (PE) von Polypropylen (PP).

Für die Trennung dieser Kunststoffe wurden zunächst Apparaturen verendet, wie sie auch für die Trennung von Mineralien üblich waren. Diese haben normalerweise eine wesentliche höhere Dichte und bewegen sich im elektrostatischen Feld auf relativ definierten parabelartigen Bahnen.

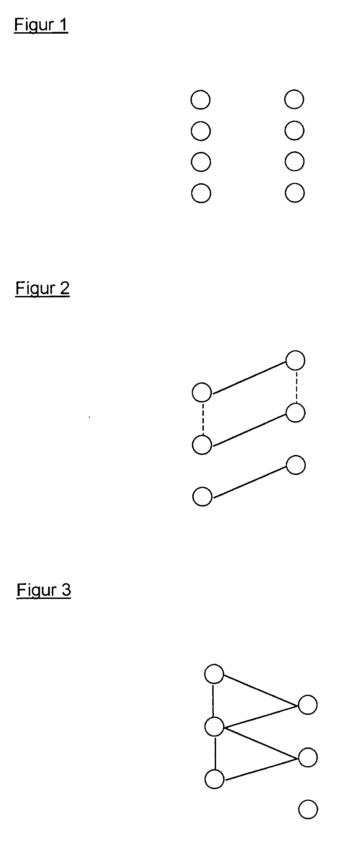

Bei den hier üblichen Freifallscheidern stehen sich die Röhren genau gegenüber (Fig. 1), die Achsendrehpunkte liegen in der Draufsicht also auf einem Rechteck. Diese Art der Röhrenscheider wird in der DE 11 54 052, außerdem in Chem.-Ing.-Techn. 53(1981), Nr. 12, S. 923 genauer beschrieben.

Der Röhrenfreifallscheider nach SU-A-1085633 weist ebenfalls Reihen von Röhren auf, die einander gegenüberstehen. Die Achsdrehpunkte der gegenüberstehenden Röhren, zwischen denen der Trennraum gebildet wird, liegen im Grundriß gleichermaßen auf einem Rechteck. Im Unterschied zu anderen Röhrenfreifallscheidern besteht allerdings jede Elektrode aus jeweils zwei hintereinanderliegenden Reihen von Röhren, die das jeweils gleiche elektrische Potential besitzen, wobei die Röhrenachspunkte dieser beiden Reihen schachbrettartig versetzt angeordnet sind.

Das nachfolgend beschriebene Verhalten von Kunststoffpartikeln in einem Freifallscheider würde auch in dem Röhrenscheider nach SU-A-1085633 zu unbefriedigenden Trennergebnissen führen.

Kunststoffe, die in vielen Fällen nach Zerkleinerung eine blättchenartige Struktur aufweisen, neigen dazu, im elektrostatischen Feld zu schweben, stoßen dabei an die Elektroden, prallen von dort ab und bewegen sich zuweilen relativ unkontrolliert in unerwünschte Richtungen.

Dieses Verfahren wirkt sich dahingehend aus, daß eine wenn auch geringe Zahl von Teilchen in den verkehrten Fraktionen auftauchen und dort die gewünschte bzw. geforderte Reinheit verhindern. Da heutzutage Reinheiten gefragt sind, die bis in den ppm-Maßstab gehen, müssen solche Irrläufer ausgeschlossen werden.

Es ist die technische Aufgabe zu lösen, die Trennschärfe eines Röhrenfreifallscheiders zur Trennung von Kunststoffgemengen zu erhöhen.

Es wurde nun eine Konfiguration der Röhren gemäß Anspruch 1 gefunden, mit der bessere Trennergebnisse erreicht werden.

Sind die Achsdrehpunkte der Röhren der einen Seiten etwas verschoben, so daß diese Punkte nicht mehr die Eckpunkte eines Rechtecks bilden, sondern die Form eines Parallelogramms, das keine rechten Winkel besitzt, so haben die Teilchen, wenn sie in Richtung auf die gegenüberliegenden Röhren beschleunigt werden, die Chance, an diesen vorbeizufliegen. Die Wahrscheinlichkeit des Aufprallens und der Ablenkung in die entgegengesetzte Richtung wird erheblich verringert.

Die Ergebnisse sind am besten, wenn die Drehpunkte genau auf die Mittelsenkrechte verschoben werden, wenn also zwei benachbarte Achsdrehpunkte der Röhren einer Reihe mit einem Achsdrehpunkt der gegenüberliegenden Reihe ein gleichschenkliges Dreieck bilden.

In den nachfolgenden Beispielen sind die Ergebnisse zweier Versuche wiedergegeben, die die Wirksamkeit der Erfindung belegen.

Die Anordnung der Röhren gegenüber dem Stand der Technik (Fig. 1) ist in den Abbildungen Fig. 2 und Fig. 3 als Draufsicht dargestellt. Im vorliegenden Ausführungsbeispiel werden senkrechte Röhren eines ansonsten bekannten Röhrenfreifallscheiders so angeordnet, daß der Abstand zwischen den Röhren der 1,5-fache Durchmesser der Einzelröhre ist. Eine solche Reihe bildet jeweils eine der Elektroden. Beide Elektroden werden erfindungsgemäß nun so angeordnet, daß die Röhren jeweils auf Lücke zueinander stehen, d.h. zwei benachbarte Achsdrehpunkte der Röhren einer Elektrode mit jeweils einem Achsdrehpunkt der Röhren der anderen gegenüberliegenden Elektrode ein gleichschenkliges Dreieck bilden.

Es bildet sich ein gegenüber der bisherigen Anordnung unwesentlich geändertes homogenes elektrisches Feld aus. Der Anteil der an der Elektrode reflektierten Teilchen wird erheblich reduziert. Stark abgelenkte Teilchen können zwischen den Röhren hindurchfliegen und gelangen aus dem Trennbereich heraus, wodurch die verbleibenden Partikel nicht mehr behindert werden und sich dadurch die Selektivität der Trennung wesentlich verbessert.

Die Ergebnisse von Trennversuchen im Vergleich des ausführungsgemäßen Scheiders gegenüber dem bekannten Röhrenfreifallscheider für die Trennaufgabe Polycarbonat (PC) - Polymetametacrylat (PMMA) werden nachfolgend dargestellt.

Beide Scheidertypen wurden mit gleichem Aufgabegut unter gleichen Konditionierungsbedingungen mit identischen Einstellungen gefahren. Das Aufgabegut wurde nur einmal durch den Scheider gefahren und unterhalb der Trennzungen aufgefangen.
Durchsatz 89 kg/h
Konditionierung mit 70 g/t Fettsäure
Kontaktierung bei 45° C im Fließbettaufwärmer
Feldstärke 3,5 kV/cm
relative Feuchte 28,4 %
bei Raumtemperatur 21° C

### 1. Röhrenscheider Stand der Technik

| | + P % | Mittelprodukt % | - N % |
|---|---|---|---|
| Mengenausbringen | 15,9 | 60,0 | 24,1 |

| PMMA | | | |
|---|---|---|---|
| Ausbringen | 4,5 | 49,2 | 46,3 |
| Wertstoffgehalt | 13,8 | 40,5 | 95,1 |

| PC | | | |
|---|---|---|---|
| Ausbringen | 27,7 | 70,5 | 2,3 |
| Wertstoffgehalt | 86,2 | 59,5 | 4,9 |

### 2. Röhrenscheider gemäß Erfindung

| | + P % | Mittelprodukt % | - N % |
|---|---|---|---|
| Mengenausbringen | 27,5 | 39,1 | 33,4 |

| PMMA | | | |
|---|---|---|---|
| Ausbringen | 4,1 | 26,4 | 69,4 |
| Wertstoffgehalt | 7,0 | 31,4 | 96,7 |

| PC | | | |
|---|---|---|---|
| Ausbringen | 47,8 | 50,1 | 2,1 |
| Wertstoffgehalt | 93,0 | 68,6 | 3,3 |

Aus den Erfolgskennziffern wird der Vorteil des erfindungsgemäßen Scheiders deutlich. Der Mittelgutanteil liegt deutlich geringer als beim herkömmlichen Scheider, der Trenneffekt ist wesentlich besser. Es wird eine wesentlich niedrigere Trennkapazität benötigt.

Ebenso deutlich unterscheiden sich die Reinheiten der Fraktionen P und N. Während beim erfindungsgemäßen Scheider beide Fraktionen mit weit über 90 % Reinheit abgetrennt werden, gelingt dies mit dem Vergleichsscheider bei nur einer Fraktion.

## Patentansprüche

1. Röhrenfreifallscheider zur Trennung von Kunststoffgemengen, bestehend aus lediglich zwei parallel gegenüberstehenden Reihen von vertikalen Röhren, zwischen denen der Trennraum gebildet wird, wobei die Röhren um die eigene Achse drehbar oder fest angeordnet sind und zur Erzeugung eines elektrostatischen Feldes zwischen den Reihen die Röhren einer Reihe elektrisch miteinander verbunden sind und an das entsprechende Potential einer Gleichstromspannungsquelle angeschlossen sind, wobei jeweils zwei benachbarte Röhrenachsdrehpunkte einer Reihe der jeweiligen Polarität mit den zwei gegenüberliegenden benachbarten Röhrenachsdrehpunkten der parallelen Reihe der jeweils anderen Polarität im Grundriß die Ecken eines Parallelogramms bilden, das keine rechten Winkel besitzt.

2. Röhrenfreifallscheider zur Trennung von Kunststoffgemengen nach Anspruch 1, dadurch gekennzeichnet, daß zwei benachbarte Röhrenachsdrehpunkte einer Reihe der jeweiligen Polarität mit einem gegenüberliegenden Röhrenachsdrehpunkt der parallelen Reihe der jeweils anderen Polarität im Grundriß auf einem gleichschenkligen Dreieck liegen.

## Claims

1. A tube-type free-fall separator for separating plastics mixtures, comprising only two rows, which are disposed in opposite parallel relationship, of vertical tubes, between which is formed the separating space, wherein the tubes are arranged fixedly or rotatably about their own axis and to produce an electrostatic field between the rows the tubes of a row are electrically connected together and are connected to the appropriate potential of a dc voltage source, wherein each two adjacent tube axis rotational points of a row of the respective polarity, with the two oppositely disposed adjacent tube axis rotational points of the parallel row of the respective other polarity, form in plan the corners of a parallelogram which does not have any right angles.

2. A tube-type free-fall separator for separating plastics mixtures according to claim 1 characterised in that two adjacent tube axis rotational points of a row of the respective polarity, with an oppositely disposed tube axis rotational point of the parallel row of the respective other polarity, lie in plan on an isosceles triangle.

## Revendications

1. Séparateur à tubes, fonctionnant en chute libre, pour séparer des mélanges de matières plastiques, constitué uniquement de deux rangées parallèlement opposées de tubes verticaux, entre lesquelles est formée la chambre de séparation, les tubes étant montés tournant par rapport à leur axe propre et, pour l'obtention d'un champ électrostatique entre les rangées, les tubes d'une rangée étant reliés électriquement les uns aux autres et étant raccordés au potentiel correspondant d'une source de tension de courant continu, respectivement deux centres voisins d'axes de tube d'une rangée, ayant une polarité, formant avec les deux centres voisins d'axes de tube opposés de la rangée parallèle, ayant l'autre polarité, en vue en plan, les sommets d'un parallélogramme qui n'a pas d'angle droit.

2. Séparateur à tubes, fonctionnant en chute libre, pour séparer des mélanges de matières plastiques suivant la revendication 1, caractérisé en ce que deux centres voisins d'axes de tube d'une rangée, ayant une polarité, sont avec un centre opposé d'axe de tube de la rangée parallèle de l'autre polarité, en vue en plan, sur un triangle isocèle.
